# EUROPÄISCHE PATENTSCHRIFT

(11) **EP 1 992 438 B1**
(45) Veröffentlichungstag und Bekanntmachung des Hinweises auf die Patenterteilung: **20.07.2016**
(21) Anmeldenummer: 08008820.6
(22) Anmeldetag: 13.05.2008
(51) Int. Cl.: B23D 47/12, B23D 45/06

(54) **Kreissägeaggregat mit verstellbarem Kreissägeblatt**
Circular sawing machine with adjustable circular saw blade
Machine de scie circulaire dotée d'une lame de scie circulaire ajustable

(30) Priorität: 14.05.2007 AT 3012007
(43) Veröffentlichungstag der Anmeldung: 19.11.2008
(73) Patentinhaber: HOKUBEMA Maschinenbau GmbH, 72505 Krauchenwies (DE)
(72) Erfinder: Waldraff, Siegfried, 88356 Ostrach (DE)
(74) Vertreter: Westphal, Mussgnug & Partner Patentanwälte mbB

(56) Entgegenhaltungen:
- EP-A1- 1 839 826
- CA-C- 2 162 624
- DD-A1- 239 757
- FR-A1- 2 589 098

## Beschreibung

Die Erfindung betrifft ein Kreissägeaggregat mit verstellbarem Kreissägeblatt, wie im Oberbegriff des Anspruchs 1 beschrieben.

Aus dem Stand der Technik sind verschiedene Bauarten von Kreissägemaschinen mit verstellbarer Schnitttiefe bekannt, bei denen eine das Kreissägeblatt tragende Sägewelle auf einem Schlitten relativ zu einem Aggregatträger verstellbar gelagert ist. Bei vielen Ausführungsformen wird dabei ein Antriebsmotor für den Kreissägenantrieb mit dem Schlitten jeweils mitbewegt, wozu teilweise beträchtliche Antriebsenergie erforderlich ist.

Um diese energietechnisch ungünstigen Bewegungen des Antriebsmotors zu vermeiden, sind auch Ausführungen bekannt, bei denen der Antriebsmotor und eine Antriebswelle nicht mit dem Schlitten mitbewegt werden, sondern die Antriebsenergie von der Antriebswelle zur Sägewelle mittels eines Zugmittels, im Allgemeinen eines Riemens übertragen wird, wobei die durch die Bewegung des Schlittens auftretende Veränderung des Achsabstandes zwischen Antriebswelle und Sägewelle Maßnahmen zur Aufrechterhaltung der erforderlichen Riemenspannung notwendig macht.

Eine Möglichkeit für den Ausgleich der Achsabstandsveränderung bei einer derartigen Kreissäge ist aus den Oberbegrift des Anspruchs 1 beschreibendem DE 195 32 726 B4 bekannt. Die Veränderung des Abstandes zwischen Antriebswelle und Snägewelle wird dabei durch die Anordnung der Umlenkrollen so ausgeglichen, dass die Umschlingungslänge des Zugmittels um die Umlenkmittel dabei konstant ist. Um dies zu erreichen, sind fünf Umlenkrollen zur Führung des Antriebsriemens erforderlich, was eine relativ aufwändige Konstruktion bedingt und die Führung des Zugmittels durch die zwei feststehenden Umlenkrollen bewirkt, dass das Lasttrum zwangsläufig umgelenkt muss, was antriebstechnisch nachteilig ist.

Aufgabe der Erfindung ist es, ein Kreissägeaggregat bereitzustellen, bei dem die Führung des Zugmittels einen großen Verstellweg der Sägewelle erlaubt, dabei jedoch einfacher aufgebaut ist.

Die Aufgabe der Erfindung wird gelöst durch ein Kreissägeaggregat mit den Merkmalen des Kennzeichenteils des Anspruchs 1. Ein Vorteil des erfindungsgemäßen Kreissägeaggregats besteht darin, dass das die Antriebswelle mit der Sägewelle verbindende Zugmittel durch lediglich vier Umlenkmittel geführt ist und der Aufbau daher einfacher ist, als bei der aus dem Stand der Technik bekannten Lösung. Weiters kann dadurch eine besonders kompakte Bauweise des Kreissägeaggregats erzielt werden und werden dadurch einerseits geringere Herstellungskosten sowie flexiblere Einsatzmöglichkeiten für ein derartiges Kreissägeexemplar bewirkt. Insbesondere für Kreissägeaggregate, die schwenkbar an einem Kreissägetisch befestigt sind, ist es von Vorteil, wenn der Antriebsmotor nicht gleichzeitig mit dem Kreissägeblatt angehoben werden muss. Dadurch, dass der Verstellweg des Führungsschlittens zumindest annähernd parallel zu einem von der Antriebswelle direkt zur Sägewelle verlaufenden ersten Trum des Zugmittels verläuft, weiters das zweite Umlenkmittel im Wesentlichen parallel zum Verstellweg des Führungsschlittens verstellbar gelagert ist und ein vom ersten Umlenkelement zum zweiten Umlenkelement führender Trumabschnitt des Zugmittels ebenfalls in einer zum Verstellweg im Wesentlichen parallelen Richtung verläuft, heben sich die bei einer Änderung des Achsabstandes zwischen Antriebswelle und Sägewelle am Zugmittel auftretenden Längenänderungen insgesamt auf.

Theoretisch ist es erforderlich, dass das erste Trum, der Verstellweg des Führungsschlittens, der Verstellweg des zweiten Umlenkmittels und der zwischen erstem und zweitem Umlenkmittels liegende Trumabschnitt zueinander exakt parallel sind, geringfügige Winkelabweichungen können dabei jedoch im Allgemeinen durch die einem Zugmittelgetriebe innewohnenden, zumindest kleinen Elastizitäten der Getriebeelemente, insbesondere des Zugmittels ausgeglichen werden, ohne die Funktionsfähigkeit des Kreissägeantriebs nennenswert funktionell zu beeinflussen. Winkeldifferenzen zwischen den Richtungen der einzelnen Zugmittelabschnitte und Verstellrichtungen von wenigen Winkelgraden, etwa bis 5° wirken sich auf die Umschlingungslänge des Zugmittels nur so gering aus, dass die Funktion des automatischen Längenausgleichs zumeist trotzdem gegeben ist und nur gegebenenfalls zusätzliche Spannvorrichtungen mit kleinem Spannweg erforderlich sind. Insbesondere eine Winkeldifferenz von unter 3° erweist sich für die Funktion des Kreissägeaggregats vorteilhaft.

Der Aggregatträger und der Führungsschlitten können dabei aus plattenartigen Bauteilen zusammengesetzt sein, es sind jedoch auch rahmenartige Ausführungen möglich.

Eine baulich besonders einfache Ausfuhrungsform des Kreissägeaggregats wird erzielt, wenn das zweite Umlenkelement im Wesentlichen ortsfest am Führungsschlitten gelagert ist, wodurch der Längenausgleich des Zugmittels ohne zusätzlichen Verstellantrieb für das zweite Umlenkelement lediglich durch den Verstellantrieb für den Führungsschlitten allein erfolgen kann.

Alternativ dazu kann das zweite Umlenkelement mittels eines Verstellantriebs und einer Verstellführung relativ zum Aggregatträger verstellbar gelagert sein, wobei der separate Verstellantrieb für das zweite Umlenkelement die Möglichkeit bietet, die Spannung des Zugmittels, z.B. für die Durchführung eines Riemenwechsels, vorübergehend aufzuheben.

Die separate Verstellführung für das zweite Umlenkelement kann dabei an die bauliche Ausführung des Kreissägeaggregats angepasst am Führungsschlitten oder am Aggregatträger angeordnet sein.

Antriebstechnisch vorteilhaft sind die Umlenkelemente im Leertrum des Zugmittels angeordnet, d.h. das direkt von der Antriebswelle zu Sägewelle verlaufende erste Trum ist als Lasttrum keiner Umlenkung unterworfen.

Das Zugmittel des Kreissägeantriebs ist vorteilhaft durch einen Riemen ausgewählt aus einer Gruppe umfassend Flächriemen, Rundriemen, Keilriemen, Keilrippenriemen, Zahnriemen gebildet, wodurch einerseits hohe Antriebsdrehzahlen des Kreissägeblatts erzielt werden können und andererseits die für die serpentinenförmige Umschlingung der Umlenkelemente erforderliche Flexibilität des Zugmittels gegeben ist.

Der Riemen kann dabei insbesondere auf der Antriebswelle und/oder der Sägewelle jeweils durch eine Riemenscheibe geführt sein, wobei durch die Wahl der Riemenscheibendurchmesser auch die Übersetzung des Kreissägeaggregats beeinflusst werden kann.

Eine größere Gestaltungsfreiheit bei der Anordnung des Antriebsmotors wird erzielt, wenn der Antriebsmotor und die Antriebswelle über ein Getriebe, insbesondere ein Riemengetriebe antriebsverbunden sind. Der Antriebsmotor kann dadurch in einen Bereich mit größerem Raumangebot angeordnet sein und kann als Standardmotor mit geringen Anforderungen an Kompaktheit ausgeführt sein.

Der Verstellantrieb für das zweite Umlenkelement dessen Verstellung jeweils mit der Verstellbewegung des Führungsschlittens übereinstimmt, kann beispielsweise einen Fluidzylinder oder einen Spindeltrieb umfassen. Die dabei vom Verstellantrieb auf das Zugmittel ausgeübte Spannkraft kann dabei einfach durch ein Druckregelventil bzw. eine Rutschkupplung mit einfachen Mitteln geregelt werden.

Unabhängig vom Vorhandensein einer eigenen Verstellvorrichtung für das zweite Umlenkelement kann das erste Umlenkelement und/oder das zweite Umlenkelement eine Spannvorrichtung zur Aufbringung einer Vorspannkraft auf das Zugmittel aufweisen. Diese Spannvorrichtung braucht lediglich einen kleinen Spannweg zur Verfügung stellen, da die Konstanthaltung der Umschlingungslänge des Zugmittels ohnehin durch das zweite Umlenkelement erfolgt; es können daher die aus dem Stand der Technik bekannten Spannvorrichtungen für ein Zugmittelgetriebe verwendet werden, wie z.B. eine zusätzliche Spannrolle, eine auf das erste bzw. zweite Umlenkelement wirkende Stellschraube usw.

Besonders vorteilhaft ist die Verwendung des erfindungsgemäßen Kreissägeaggregats bei einer Kreissäge mit einem Auflagetisch und einem unter dem Auflagetisch angeordneten, seitlich schwenkbaren Kreissägeaggregat, da der Antriebsmotor bei einem derartigen Kreissägeaggregat auch bei einem Verstellen des Kreissägeblatts immer an derselben, tiefen Position verbleibt und ein seitlicher Schwenkvorgang des Kreissägeaggregats dadurch durch einen durch einen mit dem Kreissägeblatt angehobenen Antriebsmotor nicht behindert wird.

Die Erfindung wird im Nachfolgenden anhand der in den Zeichnungen dargestellten Ausführungsbeispiele näher erläutert.

Es zeigen jeweils in vereinfachter schematischer Darstellung:
- Fig. 1: ein Schema der Zugmittelführung bei einer Ausführungsform des erfindungsgemäßen Kreissägeaggregats;
- Fig. 2: ein Schema der Zugmittelführung einer weiteren Ausführungsform des erfindungsgemäßen Kreissägeaggregats;
- Fig. 3: eine Ausführungsform des Kreissägeaggregats mit separatem Verstellantrieb für das zweite Umlenkelement in Schnittdarstellung bei angehobenem Kreissägeblatt;
- Fig. 4: das Kreissägeaggregat gemäß Ausführung Fig. 3 mit dem Kreissägeblatt in abgesenkter Stellung;
- Fig. 5: einen Schnitt durch eine weitere Ausführungsform des erfindungsgemäßen Kreissägeaggregats;
- Fig. 6: eine Schnittdarstellung einer weiteren Ausführungsform des erfindungsgemäßen Kreissägeaggregats.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

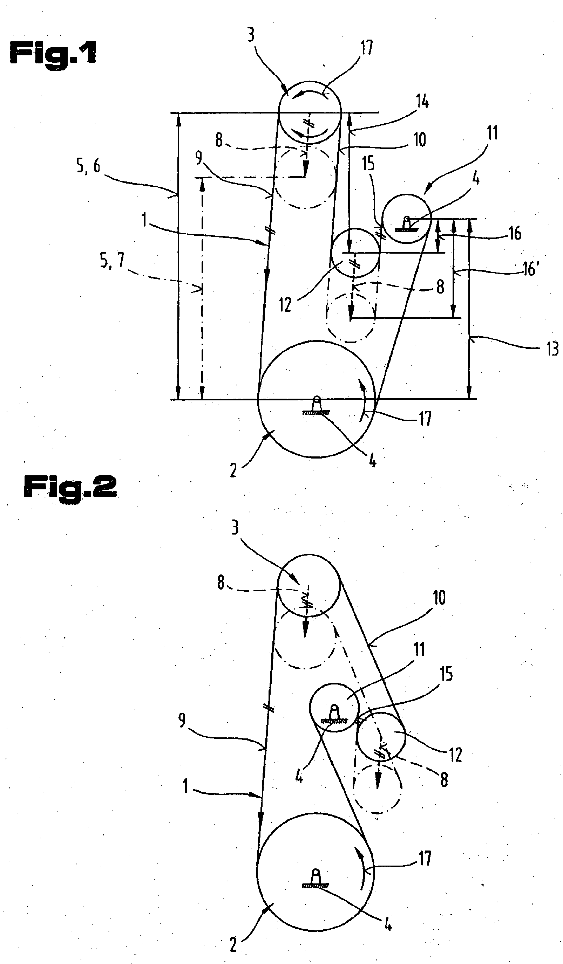

Fig. 1 zeigt schematisch die Führung eines Zugmittels 1 in einem erfindungsgemäßen Kreissägeaggregat. Das Zugmittel 1 stellt dabei eine Antriebsverbindung zwischen einer Antriebswelle 2 und einer Sägewelle 3 her, die mit einem in Fig. 1 nicht dargestellten Kreissägeblatt antriebsverbunden ist. Die Antriebswelle 2 ist dabei im Wesentlichen ortsfest an einem in Fig. 1 symbolisch dargestellten Aggregatträger 4 drehbar gelagert und wird von einem in Fig. 1 nicht dargestellten Antriebsmotor direkt oder mittels eines zwischengeschalteten Getriebes angetrieben. Die Sägewelle 3 mit dem daran befestigten Kreissägeblatt ist hingegen mittels einer Führungseinrichtung relativ zum Aggregatträger 4 verstellbar gelagert, wodurch eine gewünschte Schnitthöhenverstellung bewirkt werden kann. Durch diese Verstellung kann ein Achsabstand 5 zwischen der Antriebswelle 2 und der Sägewelle 3 zwischen einem Maximalabstand 6 und einem Minimalabstand 7 annehmen. Ein Verstellweg 8 der Sägewelle 3 verläuft dabei im Wesentlichen parallel zu einem ersten Trum 9 des Zugmittels 1, das direkt von der Antriebswelle 2 ohne Umlenkung zur Sägewelle 3 verläuft. Das erste Trum 9 zwischen Antriebswelle 2 und Sägewelle 3 verändert daher bei der Verstellung der Sägewelle 3 nicht seine Richtung, sondern nur seine Länge. Diese Veränderung der Länge des ersten Trums 9 muss durch eine gegengleiche Verlängerung eines zweiten Trums 10 des Zugmittels 1 ausgeglichen werden. Dieses zweite Trum 10 verläuft dazu von der Antriebswelle 2 um ein erstes Umlenkelement 11, beispielsweise in Form einer Umlenkrolle oder Umlenkscheibe, anschließend um ein zweites Umlenkelement 12, ebenfalls in Form einer Umlenkrolle oder Umlenkscheibe und anschließend zur Sägewelle 3. Das zweite Trum 10 ist dabei serpentinenförmig um das erste Umlenkelement 11 und das zweite Umlenkelement 12 geführt, was dadurch bewirkt wird, dass ein in Richtung des Verstellwegs 8 gemessener erster Teilachsabstand 13 von der Antriebswelle 2 zum ersten Umlenkelement 11 sowie ein ebenfalls in Richtung des Verstellwegs 8 gemessener zweiter Teilachsabstand 14 in Summe größer sind, als der Maximalabstand 6 zwischen der Antriebswelle 2 und der Sägewelle 3. Das erste Umlenkelement 11 und das zweite Umlenkelement 12 sind dabei erfindungsgemäß so zueinander angeordnet, dass ein vom ersten Umlenkelement 11 zum zweiten Umlenkelement 12 verlaufender Trumabschnitt 15 im Wesentlichen parallel zur Richtung des Verstellwegs 8 und daher auch parallel zur Richtung des ersten Trums 9 verläuft. Weiters ist das erste Umlenkelement 11 ebenso wie die Antriebswelle 2 ortsfest bezüglich des Aggregatträgers 4 gelagert, während das zweite Umlenkelement 12 ebenso wie die Sägewelle 3 in Richtung des Verstellweges 8 relativ zum Aggregatträger 4 verstellbar gelagert ist.

Wird nun zur Schnitthöhenverstellung der Achsabstand 5 zwischen Sägewelle 3 und Antriebswelle 2 verändert, wird gemeinsam mit der Sägewelle 3 auch das zweite Umlenkelement 12 in Richtung des Verstellwegs 8 verstellt und die am ersten Trum 9 eintretende Längenveränderung durch eine gegengleiche Längenveräriderung des Trumabschnitts 15 zwischen erstem Umlenkelement 11 und zweitem Umlenkelement 12 ausgeglichen. In Fig. 1 ist in strichlierten Linien die Stellung der Sägewelle 3, des zweiten Umlenkmittels 12 und des darum geführten Zugmittels 1 in abgesenkter Stellung der Sägewelle 3 dargestellt. Man erkennt dabei deutlich, dass eine Trumlänge 16 des Trumabschnitts 15 bei Verstellung der Sägewelle 3 genau um den Verstellweg 8 auf eine Trumlänge 16' zunimmt. Umgekehrt bewirkt eine Vergrößerung des Achsabstandes 5 von Antriebswelle 2 zur Sägewelle 3 eine Verlängerung des ersten Trums 9 sowie eine Verkürzung des zweiten Trums 10 durch Verkürzung der Trumlänge 16 des Trumabschnitts 15 zwischen erstem Umlenkelement 11 und zweiten Umlenkelement 12.

Bei der Führung des Zugmittels 1, gemäß der Ausführungsform in Fig. 1, weist das erste Umlenkelement 11 einen größeren Abstand zum ersten Trum 9 auf, als das zweite Umlenkelement 12.

Weiters ist in Fig. 1 erkennbar, dass bei einem Antrieb der Antriebswelle 2 gemäß Umlaufsinn 17 das erste Trum 9 das Lasttrum ist und das zweite Trum 10 das Leertrum, was eine geringere Belastung des Zugmittels 1 bewirkt, also wenn die Umlenkelemente 11 und 12 im Lasttrum angeordnet wären. Die Abmessungen der auf das Zugmittel 1 einwirkenden Umlenkmittel, also die Wirkdurchmesser von Antriebswelle 2, Sägewelle 3, erstem Umlenkelement 11 und zweiten Umlenkelement 12 können dabei in weiten Bereichen frei gewählt werden, es ist lediglich darauf zu achten, dass einerseits das gewünschte Übersetzungsverhältnis zwischen Antriebswelle 2 und Sägevarelle 3 gegeben ist, sowie die erforderliche Verstellung der Sägewelle 3 sowie des zweiten Umlenkelements 12, ohne Kollision mit dem restlichen Zugmittelgetriebe erfolgen kann.

Fig. 2 zeigt eine weitere Ausführungsform der Führung des Zugmittels 1, bei der das erste Umlenkmittel 11 einen kleineren Abstand zum ersten Trum 9 des Zugmittels 1 aufweist, als das zweite Umlenkmittel 12. Erfindungsgemäß ist dabei der von der Sägewelle 3 ausführbare Verstellweg 8 wieder im Wesentlichen parallel zur Richtung des ersten Trums 9, weiters führt das zweite Umlenkelement 12 ebenfalls den gleichen Verstellweg 8 wie die Sägewelle 3 aus und der vom ersten Umlenkelement 11 zum zweiten Umlenkelement 12 führende Trumabschnitt 15 verläuft ebenfalls im Wesentlichen parallel zum Verstellweg 8, wodurch der automatische Ausgleich der Zugmittellänge während einer Verstellung der Sägewelle 3 bewirkt wird.

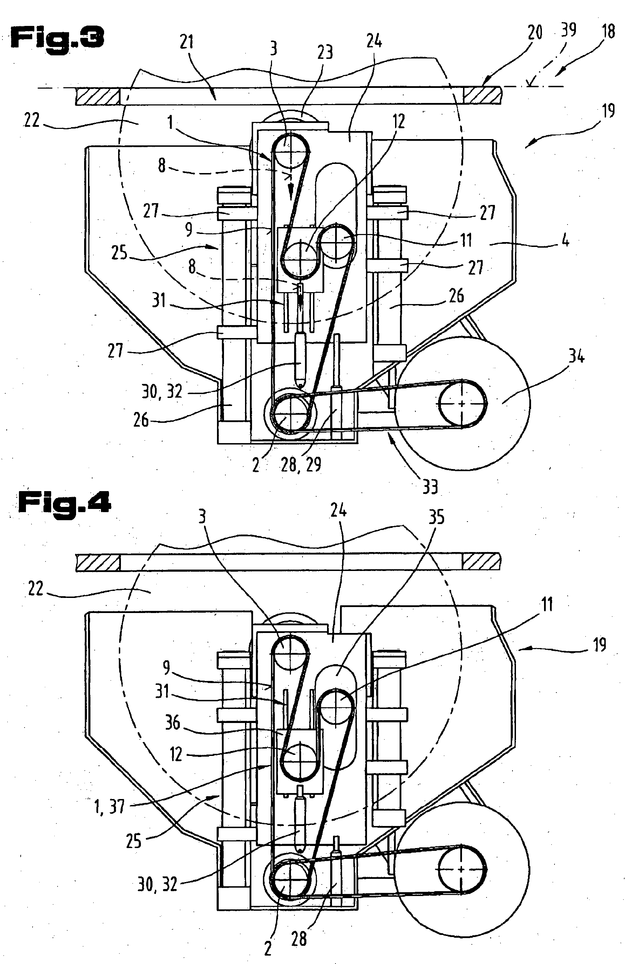

Fig. 3 zeigt ausschnittsweise einen Schnitt durch eine Kreissäge 18 mit einem erfindungsgemäßen Kreissägeaggregat 19, das an der Unterseite eines Auflagetisches 20 angeordnet ist. Durch eine Ausnehmung 21 des Auflagetisches 20 tritt ein Kreissägeblatt 22 an der Oberseite des Auflagetisches 20 hervor und kann für Schnittvorgänge verwendet werden. Das Kreissägeblatt 22 ist im dargestellten Ausführungsbeispiel mittels eines Spannflansches 23 mit der Sägewelle 3 verbunden.

Die Führung des Zugmittels 1 um die Antriebswelle 2, die Sägewelle 3, das erste Umlenkelement 11 und das zweite Umlenkelement 12 erfolgt, wie anhand von Fig. 1 beschrieben und wird an dieser Stelle nicht mehr näher erläutert. Die Antriebswelle 2 und das erste Umlenkelement 11, in Form einer Umlenkscheibe bzw. Umlenkrolle sind im Wesentlichen ortsfest am Aggregatträger 4 befestigt, der beispielsweise kastenförmig ausgeführt sein kann und in seinem Inneren das Kreissägeblatt 22 aufnimmt. Die Sägewelle 3 ist relativ zum Aggregatträger 4 verstellbar auf einem Führungsschlitten 24 gelagert, der entlang einer am Aggregatträger 4 angeordneten Führung 25 verstellbar ist. Die Führung 25 ist im dargestellten Ausführungsbeispiel durch zwei Führungssäulen 26, die am Aggregatträger 4 befestigt sind, gebildet, an denen der Führungsschlitten 24 mittels Führungselementen 27 geführt ist. Die Verstellbewegung des Führungsschlittens 24 wird durch ein Stellelement 28, beispielsweise in Form eines Fluidzylinders 29 bewirkt, der durch Steuerbefehle des Benutzers oder einer Steuervorrichtung angesteuert wird.

Die Verstellung des zweiten Umlenkelements 12, relativ zu Aggregatträger 4, erfolgt mittels eines Verstellantriebs 30 entlang einer Verstellführung 31, wobei im dargestellten Ausführungsbeispiel die Verstellführung 31 durch am Führungsschlitten 24 angebrachte Führungsschienen gebildet ist und der Verstellantrieb 30 durch einen Fluidzylinder 32 gebildet ist. Aufgrund der erfindungsgemäßen Anordnung der Umlenkelemente 11, 12 sind die Verstellwege 8 der Sägewelle 3 und der des zweiten Umlenkelements 12 im Wesentlichen identisch.

Die Antriebswelle 2 ist im dargestellten Ausführungsbeispiel über ein Getriebe 33 in Form eines Riementriebs mit einem Antriebsmotor 34 verbunden. Dadurch kann einerseits eine Übersetzung zwischen Antriebsmotor 34 und Antriebswelle 2 erfolgen, sowie der Antriebsmotor 34 in seiner Position weitgehend frei gewählt werden.

Fig. 4 zeigt das Kreissägeaggregat 19 gemäß der Ausführung in Fig. 3 mit abgesenktem Sägeblatt 22. Dazu wird ausgehend von der in Fig. 3 dargestellten angehobenen Stellung der Führungsschlitten 24 zusammen mit der daran gelagerten Sägewelle 3 mittels des Stellelements 28 nach unten verstellt. Gleichzeitig mit dem Führungsschlitten 24 wird das zweite Umlenkelement 12 mittels des Verstellantriebs 30 entlang der Verstellführung 31 nach unten verstellt, wodurch die gesamte Umschlingungslänge für das Zugmittel 1 konstant bleibt, da die Achsabstandsverkürzung zwischen Antriebswelle 2 und Sägewelle 3 durch eine gleich große Achsabstandsvergrößerung zwischen ersten Umlenkelement 11 und zweiten Umlenkelement 12 ausgeglichen wird. Im dargestellten Ausführungsbeispiel ist für das erste Umlenkelement 11 im Führungsschlitten 24 ein Durchbruch 35 vorgesehen, der die Verstellbärkeit des Führungsschlittens 24 auch bei direkter Lagerung des ersten Umlenkelements 11 am Aggregatträger 4 zulässt. Das zweite Umlenkelement 12 ist im dargestellten Ausführungsbeispiel auf einer mit der Verstellführung 31 zusammenwirkenden Verstellplatte 36 drehbar gelagert, die vom Verstellantrieb 30 in Form eines Fluidzylinders 32 bewegt wird.

Das Zugmittel 1 ist insbesondere durch einen Riemen 37 in Form eines Flachriemens, Rundriemens, Keilriemens, Keilrippenriemens oder Zahnriemens gebildet. Diese weisen die erforderliche Flexibilität auf, um die serpentinenförmige Führung um die Umlenkmittel 11, 12 problemlos zu ertragen. Die in den Fig. 3 und 4 dargestellte Ausführungsform weist sehr kompakte Abmessungen auf, da die Umlenkelemente 11, 12 bis auf einen geringen Abstand an das erste Trum 9, das direkt von der Antriebswelle 2 zur Sägewelle 3 führt, angenähert sind. Der Führungsschlitten 24 besitzt dadurch eine geringe Baubreite.

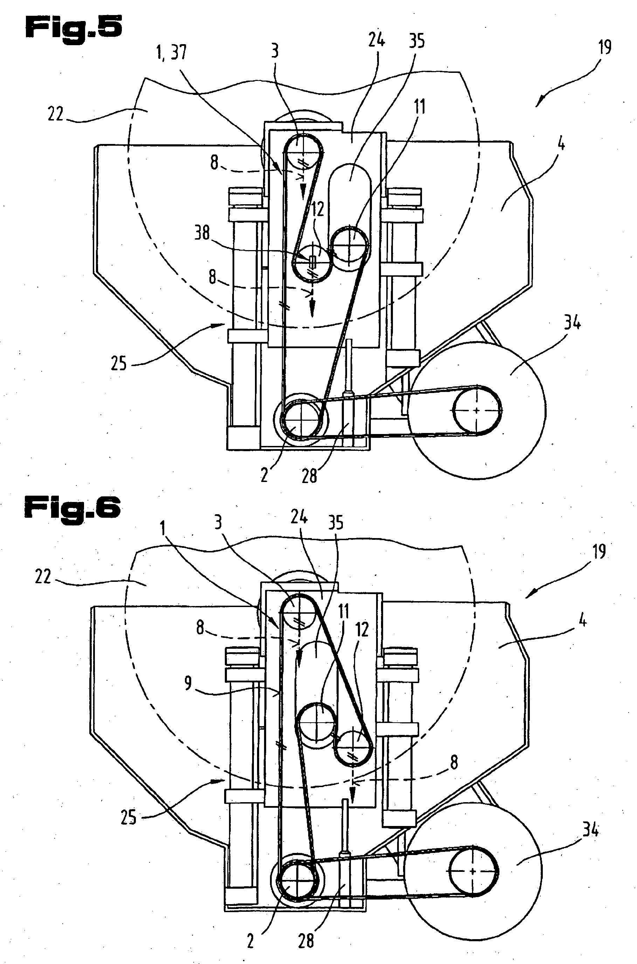

Fig. 5 zeigt eine weitere Ausführungsform eines erfindungsgemäßen Kreissägeaggregats 19, bei dem das zweite Umlenkelement 12 im Wesentlichen ortsfest am Führungsschlitten 24 drehbar gelagert ist und dadurch bei einer Verstellbewegung des Führungsschlittens 24 zwangsläufig dieselbe Bewegung, wie Sägewelle 3 ausführt und dadurch wiederum eine Veränderung des Achsabstands 5 zwischen Antriebswelle und Sägewelle 3 durch eine gegengleiche Veränderung des Achsabstands - gemessen in Richtung des Verstellwegs 8 - zwischen erstem Umlenkelement 11 und zweitem Umlenkelement 12 ausgeglichen wird. Bei dieser Ausführungsform entfällt daher der eigene Verstellantrieb 30 für das zweite Umlenkelement 12.

Um die Spannung des Zugmittels 1 in Form des Riemens 37 trotzdem beeinflussen zu können, ist eine auf das zweite Umlenkmittel 12 wirkende Spannvorrichtung 38 vorgesehen, mit der das zweite Umlenkelement 12 das Zugmittel 1 zusätzlich spannen kann. Eine derartige Spannvorrichtung 38 kann alternativ oder zusätzlich auch am ersten Umlenkelement 11 ausgebildet sein.

Fig. 6 zeigt eine weitere Ausführungsform eines erfindungsgemäßen Kreissägeaggregats 19, bei dem das Zugmittel 1, wie anhand der Fig. 2 bereits beschrieben, um die Antriebswelle 2, die Sägewelle 3 und die Umlenkelement 11 und 12 geführt ist. Bei dieser Ausführungsform weist das erste Umlenkelement 11, das ortsfest am Aggregatträger 4 drehbar gelagert ist, einen geringeren Abstand zum ersten Trum 9 des Zugmittels 1 auf, als das am Führungsschlitten 24 drehbar gelagerte zweite Umlenkelement 12.

In Fig. 3 ist an der Oberseite des Auflagetisches 20 noch eine Schwenkachse 39 angedeutet, um die das Kreissägeaggregat 19 aus der Zeichnungsebene heraus nach vorne oder hinten verschwenkt werden kann. Man erkennt, dass es für einen derartigen Schwenkvorgang vorteilhaft ist, dass der Antriebsmotor 34 bei allen Verstellbewegungen des Führungsschlittens 24 an seiner tiefsten Stelle verbleibt und daher ein kleinerer Schwenkraum unter dem Auflagetisch 20 für den Antriebsmotor 34 benötigt wird, als wenn dieser mit der Sägewelle 3 angehoben wird.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Der Ordnung halber sei abschließend darauf hingewiesen, dass zum besseren Verständnis des Aufbaus des Kreissägeaggregats 19 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3,4; 5; 6 gezeigten Ausführungen den Gegenstand von eigenständigen, erfindungsgemäßen Lösungen bilden. Die, diesbezüglichen, erfindungsgemäßen Aufgaben und Lösungen sind den Detailbeschreibungen dieser Figuren zu entnehmen.

### Bezugszeichenaufstellung

- 1: Zugmittel
- 2: Antriebswelle
- 3: Sägewelle
- 4: Aggregatträger
- 5: Achsabstand

- 6: Maximalabstand
- 7: Minimalabstand
- 8: Verstellweg
- 9: Trum
- 10: Trum

- 11: Umlenkelement
- 12: Umlenkelement
- 13: Teilachsabstand
- 14: Teilachsabstand
- 15: Trumabschnitt

- 16: Trumlänge
- 17: Umlaufsinn
- 18: Kreissäge
- 19: Kreissägeaggregat
- 20: Auflagetisch

- 21: Ausnehmung
- 22: Kreissägeblatt
- 23: Spannflansch
- 24: Führungsschlitten
- 25: Führung

- 26: Führungssäule
- 27: Führungselement
- 28: Stellelement
- 29: Fluidzylinder
- 30: Verstellantrieb

- 31: Verstellführung
- 32: Fluidzylinder
- 33: Getriebe
- 34: Antriebsmotor
- 35: Durchbruch

- 36: Verstellplatte
- 37: Riemen
- 38: Spannvorrichtung
- 39: Schwenkachse

## Patentansprüche

1. Kreissägeaggregat (19) mit verstellbarem Kreissägeblatt (22), umfassend einen Aggregatträger (4), eine an diesem drehbar gelagerte, mit einem Antriebsmotor (34) antreibbare Antriebswelle (2), einen entlang einer am Aggregatträger (4) angeordneten Führung (25) um einen Verstellweg (8) verstellbar gelagerten Führungsschlitten (24), eine zur Antriebswelle (2) parallele, am Führungsschlitten (24) drehbar gelagerte, das Kreissägeblatt (22) antreibende Sägewelle (3), ein um die Antriebswelle (2) und die Sägewelle (3) geführtes und diese miteinander antriebsverbindendes, endloses biegsames Zugmittel (1) sowie zumindest ein auf das Zugmittel (1) einwirkendes Umlenkelement (12) in Form einer Umlenkscheibe oder Umlenkrolle zum Ausgleich der durch die Verstellung des Führungsschlittens (24) bewirkten Änderung des Achsabstandes (5) zwischen Antriebswelle (2) und Sägewelle (3), **dadurch gekennzeichnet, dass** der Verstellweg (8) des Führungsschlittens (24) zumindest annähernd parallel zu einem von der Antriebswelle (2) direkt zur Sägewelle (3) verlaufenden ersten Trum (9) des Zugmittels (1) verläuft, dass ein zweites Trum (10) des Zugmittels (1) ausgehend von der Antriebswelle (2) serpentinenförmig um ein erstes Umlenkelement (11) und ein zweites Umlenkelement (12) zur Sägewelle (3) verläuft, wobei das erste Umlenkelement (11) im Wesentlichen ortsfest bezüglich des Aggregatträgers (4) gelagert ist, das zweite Umlenkelement (12) zumindest annähernd parallel zum Verstellweg (8) des Führungsschlittens (24) verstellbar gelagert ist und ein vom ersten Umlenkelement (11) zum zweitem Umlenkelement (12) führender Trumabschnitt (15) des Zugmittels (1) in einer zum Verstellweg (8) zumindest annähernd parallelen Richtung verläuft.

2. Kreissägeaggregat (19) nach Anspruch 1, **dadurch gekennzeichnet, dass** das zweite Umlenkelemente (12) im Wesentlichen ortsfest am Führungsschlitten (24) gelagert ist.

3. Kreissägeaggregat (19) nach Anspruch 1, **dadurch gekennzeichnet, dass** das zweite Umlenkelement (12) mittels eines Verstellantriebs (30) und einer Verstellführung (31) relativ zum Aggregatträger (4) verstellbar gelagert ist.

4. Kreissägeaggregat (19) nach Anspruch 3, **dadurch gekennzeichnet, dass** die Verstellführung (31) am Führungsschlitten (24) angeordnet ist.

5. Kreissägeaggregat (19) nach Anspruch 3, **dadurch gekennzeichnet, dass** die Verstellführung (31) am Aggregatträger (4) angeordnet ist.

6. Kreissägeaggregat (19) nach einem der Ansprüche 1 bis 5, **dadurch gekennzeichnet, dass** die Umlenkelemente (11, 12) im Leertrum des Zugmittels (1) angeordnet sind.

7. Kreissägeaggregat (19) nach einem der Ansprüche 1 bis 6, **dadurch gekennzeichnet, dass** das Zugmittel (1) durch einen Riemen (37) ausgewählt aus einer Gruppe umfassend Flachriemen, Rundriemen, Keilriemen, Keilrippenriemen, Zahnriemen gebildet ist.

8. Kreissägeaggregat (19) nach Anspruch 7, **dadurch gekennzeichnet, dass** der Riemen (37) auf der Antriebswelle (2) und/oder der Sägewelle (3) jeweils durch eine Riemenscheibe geführt ist.

9. Kreissägeaggregat (19) nach einem der Ansprüche 1 bis 8, **dadurch gekennzeichnet, dass** der Antriebsmotor (34) und die Antriebswelle (2) über ein Getriebe (33), insbesondere ein Riemengetriebe antriebsverbunden sind.

10. Kreissägeaggregat (19) nach einem der Ansprüche 3 bis 9, **dadurch gekennzeichnet, dass** der Verstellantrieb (30) einen Fluidzylinder (32) umfasst.

11. Kreissägeaggregat (19) nach Anspruch 10, **dadurch gekennzeichnet, dass** der Verstellantrieb (30) ein Druckregelventil umfasst.

12. Kreissägeaggregat (19) nach einem der Ansprüche 3 bis 9, **dadurch gekennzeichnet, dass** der Verstellantrieb (30) einen Spindeltrieb umfässt.

13. Kreissägeaggregat (19) nach Anspruch 12, **dadurch gekennzeichnet, dass** der Spindeltrieb eine Rutschkupplung umfasst.

14. Kreissägeaggregat (19) nach einem der Ansprüche 1 bis 13, **dadurch gekennzeichnet**, däss das erste Umlenkelement (11) oder das zweite Umlenkelement (12) eine Spannvorrichtung (38) zur Aufbringung einer Vorspannkraft auf das Zugmittel (1) aufweist.

15. Kreissäge (18), insbesondere Tischkreissäge oder Formatkreissäge mit einem Auflagetisch (20), einem unter dem Auflagetisch (20) angeordneten, um eine etwa horizontale Schwenkachse (39) seitlich schwenkbaren Kreissägeaggregat (19) mit einem den Auflagetisch (20) durchragenden, in der Höhe verstellbaren Kreissägeblatt (22), **dadurch gekennzeichnet, dass** das Kreissägeaggregat (19) nach einem der Ansprüche 1 bis 14 ausgebildet ist.

## Claims

1. Circular saw unit (19) having an adjustable circular saw blade (22), comprising a unit support (4), a drive shaft (2) which is mounted on this rotatably and is able to be driven using a drive motor (34), a guide carriage (24) which is mounted along a guide (25) arranged on the unit support (4) to be adjustable around an adjustment path (8), a saw shaft (3) which is parallel to the drive shaft (2), mounted rotatably on the guide carriage (24) and drives the circular saw blade (22), an infinitely flexible means for traction (1) which is guided around the drive shaft (2) and the saw shaft (3) and connects these to each other in the manner of a drive, as well as at least one deflection element (12) which acts on the means for traction (1) in the form of a deflection pulley or deflection roller to compensate for the change in the axial distance (5) between the drive shaft (2) and the saw shaft (3) caused by the adjustment of the guide carriage (24), **characterised in that** the adjustment path (8) of the guide carriage (24) runs at least approximately parallel to a first strand (9) of the means for traction (1) which runs directly from the drive shaft (2) to the saw shaft (3); a second strand (10) of the means for traction (1) runs, originating from the drive shaft (2), in a serpentine shape around a first deflection element (11) and a second deflection element (12) to the saw shaft (3), wherein the first deflection element (11) is mounted to be substantially fixed in location with regard to the unit support (4), the second deflection element (12) is mounted to be adjustable at least approximately parallel to the adjustment path (8) of the guide carriage (24), and a strand portion (15) of the means for traction (1) which leads from the first deflection element (11) to the second deflection element (12) runs in a direction at least approximately in parallel to the adjustment path (8).

2. Circular saw unit (19) according to claim 1, **characterised in that** the second deflection element (12) is mounted to be substantially fixed in location on the guide carriage (24) .

3. Circular saw unit (19) according to claim 1, **characterised in that** the second deflection element (12) is mounted to be adjustable by means of an adjustment drive (30) and an adjustment guide (31) relative to the unit support (4).

4. Circular saw unit (19) according to claim 3, **characterised in that** the adjustment guide (31) is arranged on the guide carriage (24).

5. Circular saw unit (19) according to claim 3, **characterised in that** the adjustment guide (31) is arranged on the unit support (4).

6. Circular saw unit (19) according to one of claims 1 to 5, **characterised in that** the deflection elements (11, 12) are arranged in the return strand of the means for traction (1).

7. Circular saw unit (19) according to one of claims 1 to 6, **characterised in that** the means for traction (1) is formed by a belt (37) selected from a group comprising flat belts, round belts, v-belts, v-ribbed belts, toothed belts.

8. Circular saw unit (19) according to claim 7, **characterised in that** the belt (37) is guided on the drive shaft (2) and/or the saw shaft (3) by a belt pulley respectively.

9. Circular saw unit (19) according to one of claims 1 to 8, **characterised in that** the drive motor (34) and the drive shaft (2) are connected in the manner of a drive via a gear (33), in particular a belt gear.

10. Circular saw unit (19) according to one of claims 3 to 9, **characterised in that** the adjustment drive (30) comprises a fluid cylinder (32).

11. Circular saw unit (19) according to claim 10, **characterised in that** the adjustment drive (30) comprises a pressure control valve.

12. Circular saw unit (19) according to one of claims 3 to 9, **characterised in that** the adjustment drive (30) comprises a spindle drive.

13. Circular saw unit (19) according to claim 12, **characterised in that** the spindle drive comprises a slip clutch.

14. Circular saw unit (19) according to one of claims 1 to 13, **characterised in that** the first deflection element (11) or the second deflection element (12) has a tensioning device (38) to apply a pre-tensioning force to the means for traction (1).

15. Circular saw (18), in particular table saw or panel saw, having a support table (20), a circular saw unit (19) which is arranged under the support table (20) and is able to pivot laterally around an approximately horizontal pivot axis (39), said circular saw unit having a circular saw blade (22) which projects through the support table (20) and is adjustable in height, **characterised in that** the circular saw unit (19) is formed according to one of claims 1 to 14.

## Revendications

1. Ensemble de scie circulaire (19) comprenant une lame de scie circulaire réglable (22), comportant un support de groupe (4), un arbre d'entraînement (2) monté mobile en rotation sur celui-ci et pouvant être entraîné par un moteur d'entraînement (34), un chariot de guidage (24) monté réglable sur une course de réglage (8) le long d'un guidage (25) situé sur le support de groupe (4), un arbre de scie (3) entraînant la lame de scie circulaire (22) monté mobile en rotation sur le chariot de guidage (24) parallèlement à l'arbre d'entraînement (2),
des moyens de traction (1) flexibles sans fin, passant autour de l'arbre d'entraînement (2) et de l'arbre de roue (3) et reliant ces arbres entre eux solidairement en entraînement, ainsi qu'au moins un élément de renvoi (12) agissant sur les moyens de traction (1), réalisé sous la forme d'un disque de renvoi ou d'un galet de renvoi pour permettre de compenser la modification de la distance axiale (5) entre l'arbre d'entraînement (2) et l'arbre de roue (3) provoquée par le réglage du chariot de guidage (24),
**caractérisé en ce que**
la course de réglage (8) du chariot de guidage (24) s'étend au moins approximativement parallèlement à un premier brin (9) des moyens de traction (1) s'étendant directement de l'arbre d'entraînement (2) à l'arbre de scie (3), un second brin (10) des moyens de traction (1) s'étend en lacets de l'arbre d'entraînement (2) à l'arbre de scie (3) en passant autour d'un premier élément de renvoi (11) et d'un second élément de renvoi (12), le premier élément de renvoi (11) étant essentiellement fixe par rapport au support de groupe (4), le second élément de renvoi (12) étant monté mobile au moins essentiellement parallèlement à la course de déplacement (8) du chariot de guidage (24), et un segment de brin (15) des moyens de traction (1) allant du premier élément de renvoi (11) au second élément de renvoi (12) s'étendant dans une direction au moins approximativement parallèle à la course de déplacement (8).

2. Ensemble de scie circulaire (19) conforme à la revendication 1,
**caractérisé en ce que**
le second élément de renvoi (12) est monté essentiellement fixe sur le chariot de guidage (24).

3. Ensemble de scie circulaire (19) conforme à la revendication 1,
**caractérisé en ce que**
le second élément de renvoi (12) est monté réglable par rapport au support de groupe (4) au moyen d'un entraînement de réglage (30) et d'un guidage de réglage (31).

4. Ensemble de scie circulaire (19) conforme à la revendication 3,
**caractérisé en ce que**
le guidage de réglage (31) est situé sur le chariot de guidage (24).

5. Ensemble de scie circulaire (19) conforme à la revendication 3,
**caractérisé en ce que**
le guidage de réglage (31) est situé sur le support de groupe (4).

6. Ensemble de scie circulaire (19) conforme à l'une des revendications 1 à 5,
**caractérisé en ce que**
les éléments de renvoi (11, 12) sont situés dans le brin de retour des moyens de traction (1).

7. Ensemble de scie circulaire (19) conforme à l'une des revendications 1 à 6,
**caractérisé en ce que**
les moyens de traction (1) sont formés par une courroie (37) choisie dans le groupe formé par les courroies plates, les courroies rondes, les courroies trapézoïdales, les courroies trapézoïdales à nervures, et les courroies dentées.

8. Ensemble de scie circulaire (19) conforme à la revendication 7,
**caractérisé en ce que**
la courroie (37) est respectivement guidée par une poulie sur l'arbre d'entraînement (2) et/ou l'arbre de scie (3).

9. Ensemble de scie circulaire (19) conforme à l'une des revendications 1 à 8,
**caractérisé en ce que**
le moteur d'entraînement (34) et l'arbre d'entraînement (2) sont reliés en entraînement par l'intermédiaire d'une transmission (33), en particulier d'une transmission à courroie.

10. Ensemble de scie circulaire (19) conforme à l'une des revendications 3 à 9,
**caractérisé en ce que**
l'entraînement de réglage (30) comprend un cylindre hydraulique (32).

11. Ensemble de scie circulaire (19) conforme à la revendication 10,
**caractérisé en ce que**
l'entraînement de réglage (30) comprend une soupape de régulation de pression.

12. Ensemble de scie circulaire (19) conforme à l'une des revendications 3 à 9,
**caractérisé en ce que**
l'entraînement de réglage (30) comprend un entraînement à broche.

13. Ensemble de scie circulaire (19) conforme à la revendication 12,
**caractérisé en ce que**
l'entraînement à broche comprend un accouplement à glissement.

14. Ensemble de scie circulaire (19) conforme à l'une des revendications 1 à 13,
**caractérisé en ce que**
le premier élément de renvoi (11) ou le second élément de renvoi (12) comprend un dispositif de serrage (38) pour exercer une force de précontrainte sur les moyens de traction (1).

15. Scie circulaire (18) en particulier scie circulaire à table de menuisier ou scie circulaire pour mise au format comprenant une table support (20), un ensemble de scie circulaire (19) monté sous la table support (20) susceptible de pivoter latéralement autour d'un axe de pivotement (39) essentiellement horizontal ayant une lame de scie circulaire (22) traversant la table support (20) et réglable en hauteur,
**caractérisée en ce que**
l'ensemble de scie circulaire (19) est réalisé conformément à l'une des revendications 1 à 14.
